# EUROPEAN PATENT SPECIFICATION

(11) **EP 0 518 404 B1**
(45) Date of publication and mention of the grant of the patent: **07.02.1996**
(21) Application number: 92201474.1
(22) Date of filing: 21.05.1992
(51) Int. Cl.: H02G 3/04

(54) **Cover for wall duct**
Deckel für eine Wandrinne
Couvercle pour goulotte de mur

(30) Priority: 12.06.1991 NL 9101016
(43) Date of publication of application: 16.12.1992
(73) Proprietor: VAN GEEL SYSTEMS B.V., NL-5282 WV Boxtel (NL)
(72) Inventor: Van Geel, Jacobus Antonius Peter, 5281 JT Boxtel (NL)
(74) Representative: Hoorweg, Petrus Nicolaas

(56) References cited:
- DE-U- 7 701 100
- DE-U- 8 704 502
- DE-U- 9 010 986

## Description

The invention relates to a cover for a wall duct, wherein the duct comprises two parallel grooves for receiving respective edge flanges of the cover, which is U-shaped in cross-section.

A wall duct of the type referred to in the preamble is disclosed in DE-U-87 04502 and is intended for accommodating electrotechnical material, that is, cables, junction boxes, switch material and the like. The substantially open channel-like parts must be closed off on the open side by a cover which must be earthed sufficiently to prevent the user coming into contact with voltage in the case of a short-circuit. The earthing of a cover normally takes place with earth cables which must be separately connected. Such an earth requires much fitting work and is sometimes also "forgotten", either because the relevant material stock is not available or through fitting errors.

The invention has for its object to improve the construction between flanges of the cover and the grooves of the wall duct such that electrical contact always occurs and sufficient holding power is provided when the cover is placed, so that no additional fixing material or safety devices are necessary.

The cover according to the invention is distinguished in that said cover is U-shaped in cross-section, wherein each said edge flange is provided with a number of deformed portions located at regular distances from each other, each said deformed portion comprising a tab extending towards the interior of the U-shape from the edge flange and provided with at least one protruding portion having a sharp edge adapted to engage the side wall of the respective groove when the cover is being fitted to the duct.

The deformed portions result in a rugged connection between the cover and the groove of the wall duct wherein the sharp edges of the deformed portions ensure that a firm material contact takes place between cover and wall duct, whereby additional earthing provision for the cover is no longer necessary. Owing to the continuous cover and wall duct parts, earthing only has to be effected at one determined position of the wall duct to sufficiently earth all parts of the wall duct. Such a connection is also obtained with certainty due to the large number of deformed portions and associated sharp edges.

It is recommended to connect the side of the deformed portion to the flange of the cover adjacent the free edge of this flange. A bending of the deformed portion relative to the wall duct is thereby realized which ensures that the deformed portion and therefore the tabs remain lying in elastic manner against the groove walls and the wall duct for a long time.

This elastic bending can be further improved by arranging an opening in the flange of the cover at least on one side adjacent to the deformed portion. The free edge of the flange is thereby released over a longer portion, which portion can twist during elastic bending of the deformed portion. This contributes to a flexible contact of the deformed portion against the walls of the grooves of the wall duct.

In order to obtain the desired torsion stiffness it is recommended according to the invention to curl the free edge of the flange.

In one embodiment the protrusion is arranged such that the sharp edge extends parallel to the free edge of the flange and will bring about an intimate contact between the material parts due to scraping contact when the cover flanges are inserted into the associated groove.

The invention further relates to a combination of cover and wall duct, wherein the cross section of the groove is locally constricted. In a preferred embodiment this constriction lies at the height of the protruding tabs of each deformed portion when the cover is mounted in the groove.

Above mentioned and other features will be further elucidated in the figure description of a number of embodiments hereinbelow. In the drawing:
fig. 1 shows a perspective front view of a wall duct with cover arranged therein,
fig. 2 shows a bottom view of a cover of fig. 1 on enlarged scale,
fig. 3 is a section along the line A-A of the cover of fig. 2,
fig. 4 is a section along the line B-B in fig. 2 of the flange of the cover on still larger scale,
fig. 5, 6 and 7 show a bottom view, longitudinal section and cross section corresponding with fig. 2, 3 and 4 respectively of an alternative embodiment of the cover,
fig. 8 shows a cross section corresponding with fig. 4 and 7 of the groove in the wall duct of fig. 1.

The wall duct shown in the figures consists of a channel-like part with bottom 1, standing side walls 2, whereof the top edge is connected to two top wall strips 3 which face toward one another. The edge strips 3 can have an equal width or a variable width depending on the type of channel or wall duct being used.

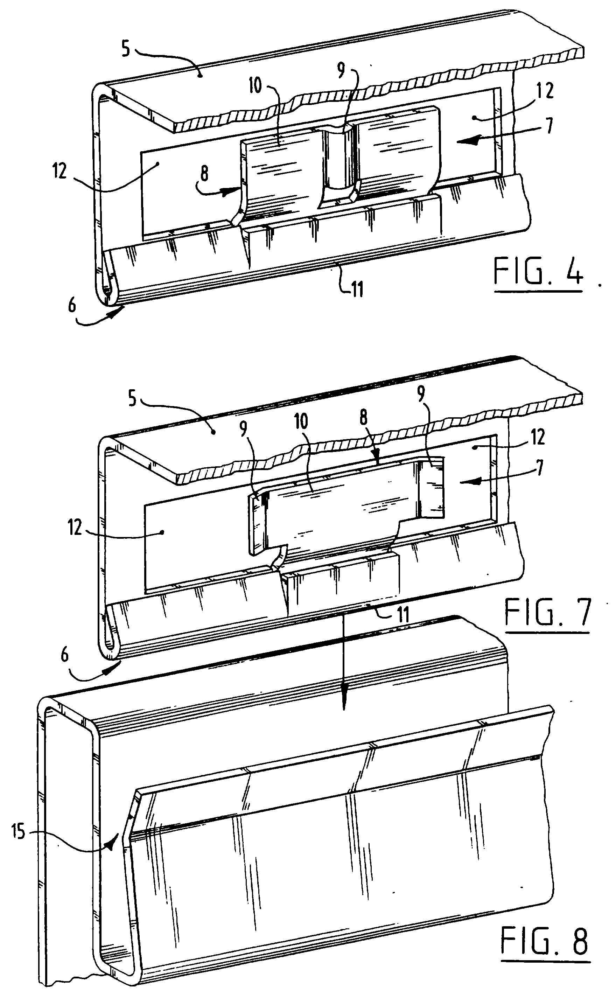

Arranged on the mutually facing free edge of the wall strips 3 is a groove-shaped part 4, the cross section of which has a relatively narrow U-shaped form. A further description will follow below with reference to fig. 8.

The grooves 4 run mutually parallel and at a mutual distance so that without the fitted cover there is an access space for fitting electrotechnical material in the wall duct 1. The bottom 1 can herein be arranged horizontally or vertically subject to the use of the wall duct in the building.

The open access space has to be closed by a cover 5, the cross section of which is substantially U-shaped. The legs of the U-shaped cross section are formed here by edge flanges 6, the height of which is such that they are received in the grooves 4 of the wall duct, this such that the upper surface of the cover 5 lies flush with the outer surface of the upper wall strips 3 of the wall duct which point towards one another.

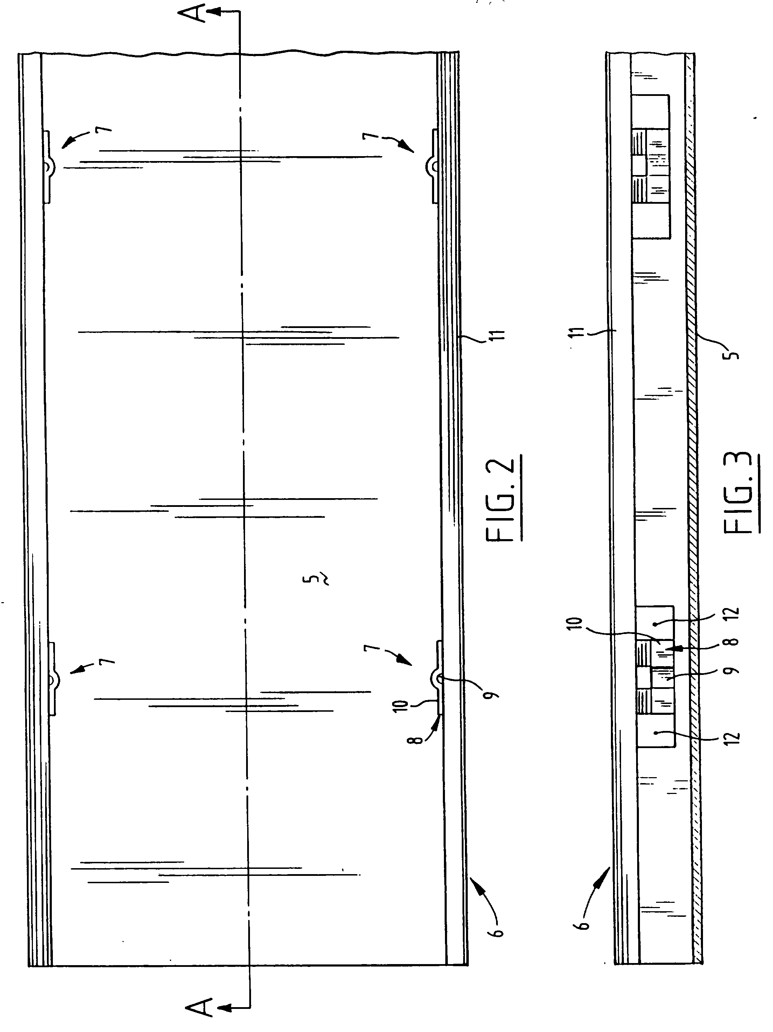

As can be seen in fig. 2, 3 and 4, each edge flange 6 of the cover 5 is embodied with-deformed portions 7 arranged at regular mutual distances. Each deformed portion consists of a rectangular part 8 which is bulged in the centre at 9, whereby two lips 10 are created which point towards one another and are mutually connected at the bulge. The bulge 9 has on the underside a sharp edge which is situated inside the U-shaped cover part, thereby causing no danger to the user. The sharp edge of the bulge 9 of lips 10 is also situated protruding noticeably relative to the free edge 11 of flange 6. This free edge is curled in the embodiment shown, whereby this free edge acquires a thickened form.

Arranged on either side of the rectangular part 8 of the deformed portion 7 is a recess 12, whereby the free edge strip portion becomes greater relative to the length of the rectangular part 8 and the deformed portion 7 is therefore connected to the remaining material of the cover part 5 over a longer free edge strip portion 11.

As will be further elucidated hereinafter, this will contribute to a greater flexibility of the deformed portion 7 relative to the wall part 5 since the rectangular part 8 will bend outward relative to the edge strip 11, whereby this edge strip portion will twist.

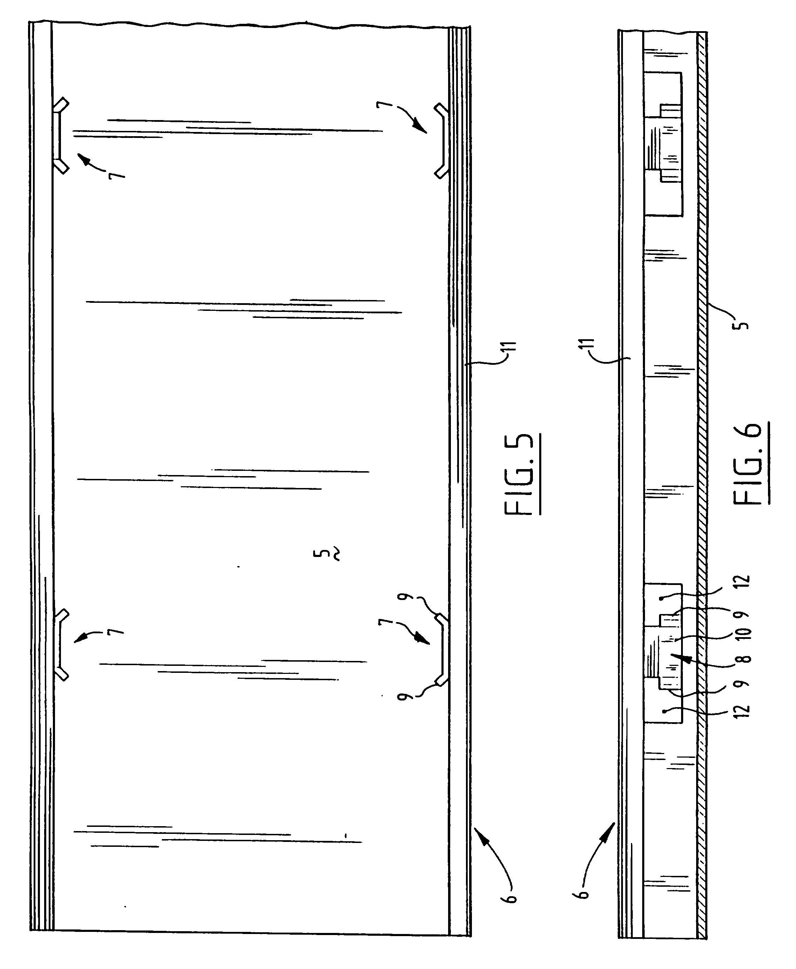

The embodiment of the cover 5 as according to fig. 5, 6 and 7 is distinguished from the above described cover in that the deformed portion 7 is now formed by a rectangular part 8, the lips 10 of which point outward. The lips have bulges 9 which point away from one another so that two cutting edges are created perpendicularly of the free edge part 11 which are located at a mutual distance.

Recesses 12 are likewise arranged in this embodiment one either side of the rectangular part.

It will be apparent from the above that the deformed portion 7 in both embodiments is bent out of the material of the edge flange of the cover, wherein the recesses 12 can be formed by a punching operation. Such a production process can be fully automated so that production costs of the cover can remain low. It will likewise be apparent that fitting costs are considerably reduced because separate components are not required.

Drawn on enlarged scale in fig. 8 is a cross section of the groove of the wall duct, wherein it is noted that according to the invention a local constriction is arranged at 15. The free edge portion of the free leg of the U-shaped cross section herein diverges outward, whereby a guiding edge is formed.

There now follows a description of the fitting of the cover 5 on wall duct 1.

The cover part 5 is oriented such that the edge flanges 6 of the cover extend in the grooves 4, wherein the deformed portions 7 are received against the free leg of the narrow U-shaped cross section of groove 4. The deformed portion 7 will herein tend to diverge outward relative to the cover part 5, which tendency is furthered by the guiding edge on the top above the constriction 15. In both embodiments according to fig. 2 and 5 the sharp edge 9 of the lips 10 will scrape along the inner wall of the U-shaped groove and bring about an intimate contact between the material of the cover and the duct part respectively. Because the deformed portions 7 are arranged at regular intervals along the cover in the edge of the flange, sufficient contacts result over a determined length to be able to effect the desired earthing.

It is necessary here that the cover part 5 comes to lie over a butt joint of the channel parts of the wall duct, whereby an interconnection of wall duct parts is realized.

The bending of deformed portions 7 is such that not only is the cover part 5 fixed sufficiently firmly to the wall duct part but also so that release is again possible to enable replacement or addition of electrical parts.

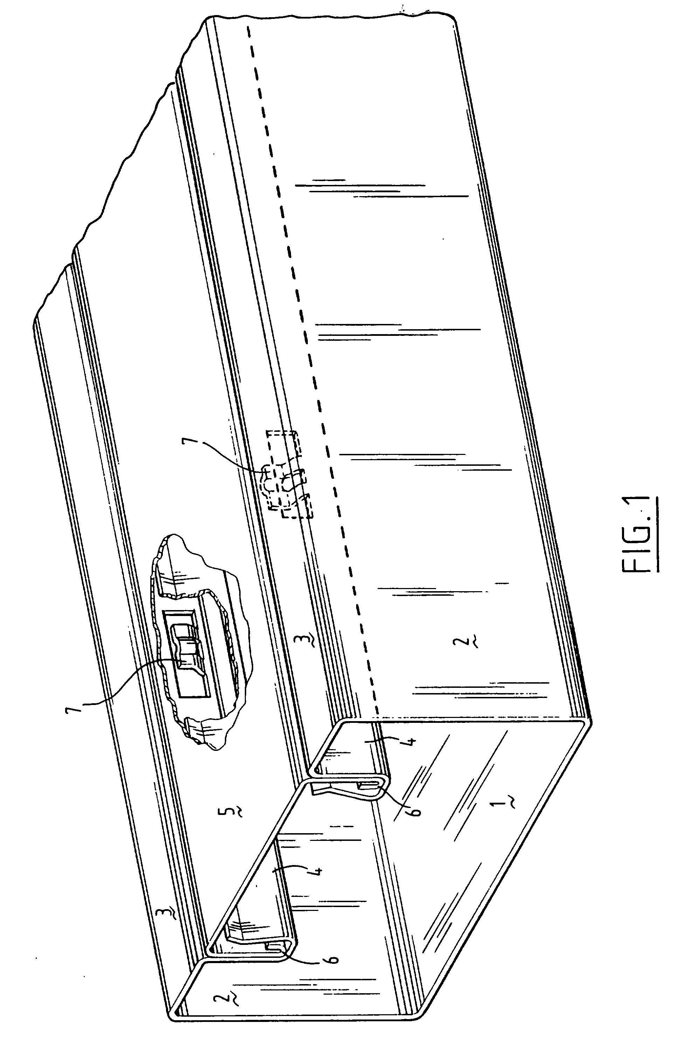

Release of the cover part is assisted in that the deformed portion 7 is located at the height of the constriction 15, whereby the cover part 5 is held fast purely by friction and is not enclosed behind the constriction 15. See also fig. 1.

The invention is not limited to the above described embodiments.

## Claims

1. A cover (5) for a wall duct, wherein the duct comprises two parallel grooves (4) for receiving respective edge flanges (b) of the cover, **characterized in that** said cover is U-shaped in cross-section, wherein each said edge flange is provided with a number of deformed portions (7) located at regular distances from each other, each said deformed portion comprising a tab (10) extending towards the interior of the U-shape from the edge flange (6) and provided with at least one protruding portion (9) having a sharp edge adapted to engage the side wall of the respective groove (4) when the cover is being fitted to the duct.

2. A cover as claimed in claim 1, **characterized in that** the tab (10) is connected to the flange (6) by an edge of the tab adjacent the free edge (11) of this flange (6).

3. A cover as claimed in claim 1 or 2, **characterized in that** an opening (12) is provided in the edge flange (6) on at least one side adjacent to the deformed portion (7).

4. A cover as claimed in any of the foregoing claims, **characterized in that** the free edge (11) is curled over on itself.

5. A cover as claimed in any of the foregoing claims, **characterized in that** the protruding portion is formed substantially in the middle of the tab (10) and in that the sharp edge is provided on an extremity of the protruding portion adjacent to the free edge (11).

6. A combination of a wall duct and a cover as claimed in any of the claims 1 to 5, **characterized in that** said grooves have, seen in cross section, a local constriction (15) .

7. A combination as claimed in claim 6, **characterized in that** in the fitted situation the constriction (15) lies at the height of the inward protruding deformed portion (7) in the edge flanges (6) of the cover (5).

## Patentansprüche

1. Deckel (5) für eine Wandrinne, bei welchem die Rinne zwei parallele Nuten (4) zum Empfangen entsprechender Randflansche (6) des Deckels umfaßt, dadurch gekennzeichnet, daß der Deckel im Querschnitt U-förmig ist, bei welchem Deckel jeder Randflansch mit einer Anzahl von sich in regelmäßigen Abständen voneinander befindenden verformten Abschnitten (7) versehen ist, wobei jeder verformte Abschnitt einen Streifen (10) umfaßt, der von dem Randflansch (6) zum Inneren der U-Form hin verläuft und mit wenigstens einem vorspringenden Abschnitt (9) versehen ist, welcher eine scharfe Kante aufweist, die dazu angepaßt ist, um an die Seitenwand der entsprechenden Nut (4) anzugreifen, wenn der Deckel in die Rinne eingepaßt ist.

2. Deckel nach Anspruch 1, dadurch gekennzeichnet, daß der Streifen (10) durch einen an den freien Rand (11) diesen Flanschs (6) angrenzenden Rand des Streifens mit dem Flansch (6) verbunden ist.

3. Deckel nach Anspruch 1 oder 2, dadurch gekennzeichnet, daß in dem Randflansch (6) auf wenigstens einer an den verformten Abschnitt (7) angrenzenden Seite eine Öffnung (12) vorgesehen ist.

4. Deckel nach einem der vorhergehenden Ansprüche, dadurch gekennzeichnet, daß der freie Rand (11) auf sich selbst übergerollt ist.

5. Deckel nach einem der vorhergehenden Ansprüche, dadurch gekennzeichnet, daß der vorspringende Abschnitt im wesentlichen in der Mitte des Streifens (10) gebildet ist und daß an einem an den freien Rand (11) angrenzenden äußersten Ende des vorspringenden Abschnitts die scharfe Kante vorgesehen ist.

6. Kombination einer Wandrinne und eines Deckels nach einem der Ansprüche 1 bis 5, dadurch gekennzeichnet, daß die Nuten, im Querschnitt gesehen, eine lokale Verengung (15) aufweisen.

7. Kombination nach Anspruch 6, dadurch gekennzeichnet, daß in der eingepaßten Lage die Verengung (15) in der Höhe des nach innen vorspringenden verformten Abschnitts (7) in den Randflanschen (6) des Deckels (5) liegt.

## Revendications

1. Couvercle (5) pour une traversée de mur, dans lequel la traversée comprend deux rainures parallèles (4) pour recevoir des rebords d'ailes (6) respectifs du couvercle, **caractérisé en ce que** ledit couvercle a la forme d'un U en coupe transversale, dans lequel chaque rebord d'aile est pourvu d'un certain nombre de parties déformées (7) placées à des distances régulières les unes des autres, chaque dite partie déformée comprenant une patte (10) s'étendant vers l'intérieur de la forme en U à partir du rebord d'aile (6) et pourvue d'au moins une partie faisant saillie (9) présentant une arête vive adaptée pour se mettre en prise avec la paroi latérale de la rainure correspondante (4) lorsque le couvercle est placé sur la traversée.

2. Couvercle selon la revendication 1, **caractérisé en ce que** la patte (10) est raccordée au rebord (6) par un bord de la patte adjacent au bord libre (11) de ce rebord (6).

3. Couvercle selon la revendication 1 ou la revendication 2, **caractérisé en ce qu'une** ouverture (12) est ménagée dans le rebord d'aile (6) sur au moins un côté adjacent à la partie déformée (7).

4. Couvercle selon l'une quelconque des revendications précédentes, **caractérisé en ce que** le bord libre (11) est recourbé sur lui-même.

5. Couvercle selon l'une quelconque des revendications précédentes, **caractérisé en ce que** la partie faisant saillie est formée sensiblement dans le milieu de la patte (10) et en ce que le bord vif est prévu sur une extrémité de la partie faisant saillie adjacente au bord libre (11).

6. Combinaison d'une traversée de mur et d'un couvercle selon l'une quelconque des revendications 1 à 5, **caractérisée en ce que** lesdites rainures présentent, vues en coupe transversale, un rétrécissement local (15).

7. Combinaison selon la revendication 6, **caractérisé en ce que**, à l'état installé, le rétrécissement (15) se situe à la hauteur de la partie déformée faisant saillie vers l'intérieur (7) dans les rebords d'aile (6) du couvercle (5).
